# EUROPÄISCHE PATENTANMELDUNG

(11) **EP 0 690 317 A1**
(43) Veröffentlichungstag der Anmeldung: **03.01.1996**
(21) Anmeldenummer: 95109585.0
(22) Anmeldetag: 21.06.1995
(51) Int. Cl.: G01S 17/42

(54) **Verfahren und Einrichtung zur optischen Bestimmung räumlicher Positionen einzelner reflektierender Objekte**

(30) Priorität: 30.06.1994 DE 4422886
(71) Anmelder: Daimler-Benz Aerospace Aktiengesellschaft, D-81663 München (DE)
(72) Erfinder: Plamper, Jörg, D-86529 Schrobenhausen (DE); Motzko, Friedrich, D-86529 Schrobenhausen (DE)

(57) **Zusammenfassung**

Die Erfindung bezieht sich auf ein Verfahren zur dreidimensionalen Bestimmung der räumlichen Position von lichtreflektierenden Objekten mittels eines optischen Pulslaufzeit-Abstandssensors mit Mehrtor-Signalverarbeitung, wobei das Gesichtsfeld der Meßeinrichtung mit jedem Sendepuls als Ganzes erfaßt und die Richtungsinformation durch eine optische Abbildung des Meßobjekts auf einen positionsempfindlichen Photodetektor erhalten wird. Ausführungsbeispiele sind ausführlich beschrieben und in den Abbildungen skizziert.

## Beschreibung

Die Erfindung bezieht sich auf ein Verfahren zur optischen Bestimmung räumlicher Positionen von lichtreflektierenden Objekten gemäß dem Oberbegriff des Anspruchs 1.

Seit geraumer Zeit besteht der Bedarf nach einem Meßverfahren, das es ermöglicht, mit einem kompakten Sensoraufbau Objekte im Abstand von einigen bis einigen -zig Metern räumlich schnell zu lokalisieren. Messungen dieser Art sind eigentlich eine Domäne des Radars, doch läßt sich mit diesem Meßprinzip die hier geforderte Genauigkeit nicht erreichen.

Auf der Suche nach Alternativen wurden aktiv-optische Verfahren in Betracht gezogen, die die Genauigkeitsanforderungen leicht erfüllten, dies jedoch nicht für alle drei Raumkoordinaten gleichzeitig können. Bislang war es entweder möglich, die Richtung zu bestimmen, in der sich ein Objekt befindet, oder den Abstand eines Objekts in einer ganz bestimmten Richtung, aber nicht Richtung und Abstand eines Objekts innerhalb eines gewissen Meßvolumens. Passive Triangulationsverfahren könnten die geforderte Leistung zur Not erbringen, aber wiederum - wegen der notwendigen Triangulationsbasis - nicht mit einem Meßaufbau der geforderten Kompaktheit.

Will man mit einem näherungsweise punktförmigen optischen Meßaufbau den Abstand zu einem Meßobjekt bestimmen, so stehen hierfür nur aktive Laufzeitmeßverfahren zur Verfügung. Um darüber hinaus eine dreidimensionale Positionsbestimmung durchzuführen, ist es gebräuchlich, mit einem aktiven Laufzeitsensor, der ein kleines Gesichtsfeld besitzt, den Raumwinkel des Meßbereichs abzutasten und bei Vorhandensein eines Objekts dessen Abstand zu messen. Die Richtung, in der sich das Objekt befindet, entspricht der Ausrichtung des Gesichtsfelds zur Zeit der Messung, sie wird also vorgegeben, nicht gemessen. Das ist die Vorgehensweise beim klassischen Radar-Meßprinzip. Sie besitzt den Vorteil, daß mit einem einzigen Sensor beliebig viele Objekte erfaßt werden können, denn diese Erfassung erfolgt nicht gleichzeitig. Nachteilig ist hingegen, daß bei der Erfassung eines einzelnen Objekts bei jedem Abtastvorgang alle Messungen bis auf eine umsonst sind. Soll ein zweidimensionaler Winkelbereich überwacht werden, so dauert das Abtasten für die attraktivsten Einsatzmöglichkeiten viel zu lange. In der Radartechnik bieten die Phased-Array-Antennen die Möglichkeit, den Abtastvorgang zu beschleunigen, jedoch existiert im optischen Bereich kein Äquivalent hierzu.

Ein Ansatz zur Überwindung dieser scheinbaren Schwäche optischer Verfahren besteht darin, den gesamten Winkelmeßbereich mit einer Anordnung aus vielen einzelnen Abstandsensoren mit unterschiedlichen Meßrichtungen gleichzeitig zu überwachen. Hier ist aber der apparative Aufwand sehr groß, weshalb dieses Meßprinzip, das Stand der Technik ist, nur in stark vereinfachter Form Anwendung findet.

Aus der DE 34 15 635 A1 ist ein Verfahren und eine Einrichtung zur optischen Bestimmung der räumlichen Position von lichtreflektierenden Objekten bekannt, wobei ein Sender den gesamten zu überwachenden Raumwinkelbereich abdeckt und der Empfänger aus einer Matrixanordnung von vielen Detektorelementen mit einer gemeinsamen Abbildungsoptik besteht. Dieses Ausführungsbeispiel bezieht sich jedoch auf ein abtastendes Meßverfahren, bei dem immer nur ein Photodetektor aktiv ist. Es muß also für jeden einzelnen Photodetektor ein eigener Lichtimpuls zur Entfernungsmessung benutzt werden. Den Abstand zu einem Meßobjekt mit einem einzelnen Laufzeitsensor zu bestimmen und einen bestimmten Raumwinkelbereich simultan zu überwachen ist mit dieser Einrichtung nicht möglich.

Aus der DE 39 15 627 C2 ist ebenfalls ein abtastendes Meßverfahren bekannt, bei dem lediglich ein linearer Winkelbereich betrachtet wird, wobei Sender und Empfänger aus mehreren Elementen bestehen. Auch mit dieser Einrichtung ist es nicht möglich, einen Raumwinkelbereich simultan zu überwachen und das Gesichtsfeld mit jedem Sendepuls als Ganzes zu erfassen.

Der vorliegenden Erfindung liegt die Aufgabe zugrunde ein praktisch verwertbares optisches Meßverfahren der eingangs genannten Art zu schaffen, das den Abstand zum Meßobjekt mit einem einzelnen Laufzeitsensor bestimmen kann, den Meßaufbau einfach und geometrisch klein hält und einen gewissen Raumwinkelbereich simultan überwacht, sowie zur Bestimmung der räumlichen Position des Meßobjekts dessen Abstand und die Richtung bestimmt, in der es sich befindet, wobei das Gesichtsfeld mit jedem Sendeimpuls als Ganzes erfaßt wird.

Diese Aufgabe wird durch die im Anspruch 1 aufgezeigten Verfahrensmerkmale gelöst und durch die im Anspruch 2 aufgezeigten Maßnahme realisiert. In den weiteren Unteransprüchen sind Ausgestaltungen und Weiterbildungen angegeben und in der nachfolgenden Beschreibung anhand von Ausführungsbeispielen erläutert. Die Figuren der Zeichnung veranschaulichen und ergänzen diese Erläuterungen. Es zeigen:
- Fig. 1: ein Schaubild bezüglich der Verhältnisse bei einer Bestimmungsmessung von Richtung und Abstand,
- Fig. 2: ein Schaubild bezüglich der Vorgänge am Empfänger im Detail,
- Fig. 3: ein Blockschaltbild eines Ausführungsbeispiels einer Signalverarbeitungseinrichtung,
- Fig. 4: ein Blockschaltbild eines Ausführungsbeispiels einer Signalverarbeitung.

Der allgemeine Erfindungsgedanke sieht vor, mit Hilfe von optischen Linsen eine Abbildung entfernter Objekte zu erhalten, speziell eine Abbildung aus dem Unendlichen. Diese ist dadurch markant, weil alle Lichtstrahlen, die aus einer bestimmten Richtung kommen die Abbildungsoptik treffen, in einem bestimmten Punkt der Bildebene vereinigt werden: Es wird also eine Richtung, die sich im Raum z.B. durch zwei Richtungscosinusse beschreiben läßt, in einen Ort transformiert, der durch ein Koordinatenpaar in einer Ebene angegeben werden kann. Plaziert man nun dort einen ortsempfindlichen Detektor, also einen, der messen kann, welcher Punkt seiner empfindlichen Fläche von Licht getroffen wird, so mißt man damit indirekt auch aus welcher Richtung dieses Licht vor der optischen Abbildung kam.

Diesen "Kunstgriff" wendet die Natur beim Wirbeltierauge an, und der Mensch hat ihn mit der Erfindung der Camera Obscura nachvollzogen. Sowohl beim Sehvorgang als auch bei der Photographie handelt es sich im Grunde um die indirekte Bestimmung der Einfallsrichtung von Lichtstrahlen aus einem größeren Raumwinkelbereich durch optische Abbildung und nachfolgende Bestimmung des Bildortes. Die direkte Methode wird von der Natur beim Facettenauge der Insekten praktziert. Dort blicken viele Lichtempfänger mit sehr kleinem Gesichtsfeld in unterschiedliche Raumrichtungen. Die Linse wird dabei nicht eingespart, sondern ist vielmehr in vervielfachter Ausführung erforderlich, um jedem Einzelauge das nötige enge Gesichtfeld bei gleichzeitig ausreichender Lichtempfindlichkeit zu verleihen. Jede der vielen Linsen ist viel kleiner als die einzelne beim Wirbeltierauge, was zu wesentlich kleinerer Lichtempfindlichkeit und darüber hinaus zu signifikant schlechterer Auflösung führt. Damit ist diese direkte Methode zur Richtungsbestimmung der indirekten weit unterlegen. Bei alledem ist sie wegen der simultanen Erfassung aller Meßwerte immer noch um Größenordnungen schneller als ein abtastendes Verfahren, das als einzigen Vorteil den der größeren Empfangsöffnung ins Feld führen könnte. Beispiele für abtastende Verfahren zur Richtungsbestimmung findet man in der Natur nicht. So betrachtet erweist sich der scheinbare Nachteil optischer Sensoren, daß hier keine schnelle Strahlablenkung möglich ist, als völlig irrelevant. Er wird von der Möglichkeit der optischen Abbildung mehr als aufgewogen.

Es gilt nun dieses Richtungsmeßverfahren mit einem Abstandsmeßverfahren so zu kombinieren, daß beide Größen möglichst mit einer einzigen Messung bestimmt werden können. Daraus ergibt sich zwingend die Forderung nach einem großen Gesichtsfeld für den Abstandsensor. Laufzeitsensoren, die wie oben dargelegt als einzige geeignet sind, existieren bislang aber nur mit kleinen Gesichtsfeldern. Der Grund hierfür ist letztlich die große Geschwindigkeit des Lichts, die kleine Laufzeiten hervorruft und Detektoren mit entsprechend kurzen Ansprechzeiten notwendig macht. Da diese aber eine kleine elektrische Kapazität des Detektors erfordern, die wiederum proportional zur lichtempfindlichen Fläche ist, sind Detektoren, die sich für herkömmliche Laufzeitsensoren eignen, notwendigerweise geometrisch klein. Um eine ausreichende Lichtempfindlichkeit zu erzielen, muß aber ein Lichtbündel mit möglichst großem Querschnitt erfaßt werden. Man versieht den Detektor deshalb mit einer Sammellinse, die wesentlich größer als seine eigene empfindliche Fläche ist. Das Gesichtsfeld dieser Anordnung entspricht dann dem Verhältnis vom Durchmesser des Detektors zur Brennweite der Sammellinse, die ihrerseits nicht wesentlich kleiner als der Linsendurchmesser gemacht werden kann und somit groß gegen den Durchmesser des Detektors sein muß. Daraus ergibt sich zwangsläufig ein kleines Gesichtsfeld.

Eine Vergrößerung des Empfängergesichtsfelds kann also entweder durch Verkleinerung der Linsenbrennweite und damit auch des -durchmessers oder auch durch Vergrößerung des Detektors bewirkt werden. Sie geht somit immer mit einer Verringerung entweder der Lichtempfindlichkeit oder aber der Ansprechgeschwindigkeit einher.

Für den hier vorgesehenen Zweck sind die Anforderungen an die Lichtempfindlichkeit des aktiv arbeitenden Abstandsensors sehr hoch, weil sein Sender das gesamte Gesichtsfeld möglichst gleichmäßig ausleuchten muß, wodurch der größte Teil des Lichts das Meßobjekt nicht treffen kann und folglich verlorengeht. Darum scheidet eine Verkürzung der Linsenbrennweite zur Vergrößerung des Gesichtsfelds aus, diese kann nur durch Vergrößerung des Detektors bewirkt werden. Aus dem gleichen Grund kommen als Sender nur hochintensive Pulslichtquellen in Frage; alle verfügbaren kontinuierlich strahlenden, modulierbaren Lichtquellen scheiden wegen zu geringer Leistung von vornherein aus. Es liegt folglich nahe, zur Abstandsmessung Pulslaufzeit-Verfahren einzusetzen. Wegen der großen empfindlichen Fläche kann der Detektor nur relativ langsam ansprechen, Meßaufgabe ist also die Bestimmung der zeitliche Lage eines relativ langen elektrischen Pulses, der sich aufgrund des Meßeffekts im Vergleich zu seiner Dauer nur wenig auf der Zeitachse verschiebt. Erst neuere Verfahren (vgl. P 4305011.5) erlauben es, die zeitliche Lage eines solchen Pulses so genau zu bestimmen, daß sich Abstandsänderungen auflösen lassen, welche signifikant kleiner als die Reichweite des Sensors sind.

Ein Meßverfahren, das den obengenannten Anforderungen entspricht, läßt sich im Rahmen der genannten Randbedingungen auf zweierlei Weise realisieren: Entweder man mißt Richtung und Abstand mit einem gemeinsamen Empfänger, oder es werden zwei getrennte Baugruppen verwendet. Letzteres tut der gewünschten Kompaktheit des Meßaufbaus keinen nennenswerten Abbruch, weil kein Mindestabstand zwischen den beiden Empfängern erforderlich ist. Je nach Art der Realisierung erhält man unterschiedliche Eigenschaften der Meßeinrichtung, sodaß eine getrennte Beschreibung der beiden Ausgestaltungsmöglichkeiten sinnvoll ist.

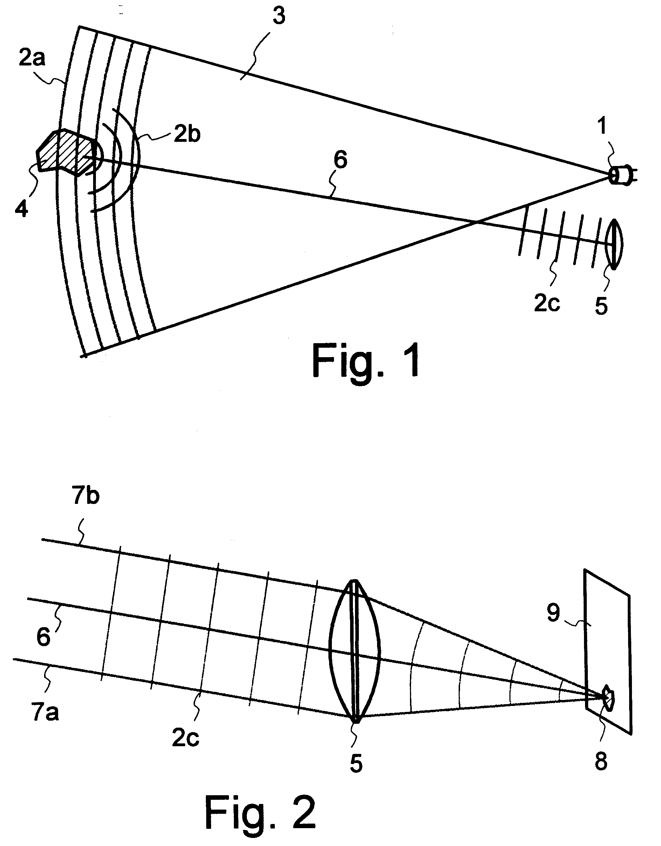

Die Fig. 1 veranschaulicht ein Ausführungsbeispiel zur Bestimmung von Richtung und Abstand mit einem einzigen Empfänger. Ein Sender 1 emittiert einen kurzen Lichtpuls, hier angedeutet als Wellenfront 2a in einen gewissen Raumwinkelbereich 3. Die Sendedivergenz ist dabei so bemessen, daß das gesamte gewünschte Gesichtsfeld möglichst gleichmäßig ausgeleuchtet wird. Ein Teil des ausgesandten Lichts trifft das Meßobjekt 4 und wird in Form einer sekundären Wellenfront 2b reflektiert. Wiederum ein Teil 2c hiervon trifft die Empfängeroptik 5 als quasi ebene Welle, was in der geometrischen Optik einem Parallelstrahlenbündel entspricht, dessen Richtung durch diejenige Normale 6 auf der Wellenfront gegeben ist, die durch den Mittelpunkt der Lichteintrittsöffnung führt. Wie leicht zu ersehen ist, weist diese Gerade 6 vom Empfänger aus genau auf das Meßobjekt.

Die Vorgänge am Empfänger zeigt îm Detail die Fig. 2. Die Empfängeroptik 5, die eintreffende Wellenfront 2c und ihre Normale 6, die den Zentralstrahl bildet, entsprechen Fig. 1. Zusätzlich sind hier noch die Randstrahlen 7a, 7b eingezeichnet. Diese Strahlen werden nun von der Empfangsoptik in einem Bild des Meßobjekts 8 vereinigt. Da das Meßobjekt allerdings selbst einen gewissen Raumwinkelbereich einnehmen muß, um einen endlichen Anteil der Sendeleistung zu reflektieren, ist auch sein Bild nicht punktförmig sondern ausgedehnt. Der Ort, an dem dieses Bild in der Bildebene erscheint, ist ein direktes Maß für die Richtung, in der sich das Meßobjekt befindet. Da das Meßobjekt nur von einem kurzen Lichtpuls beleuchtet wird, erscheint das Bild auch nur für eine ebenso kurze Zeit, und zwar mit einer Verzögerung gegen den Zeitpunkt der Lichtaussendung, die ein Maß für den Abstand des Meßobjekts ist.

In der Bildebene der Abbildungsoptik befindet sich nun der Photodetektor. Da mit ihm gleichzeitig Abstand und Richtung gemessen werden sollen, wird hier ein s.g. "Position Sensitive Detector" (PSD) eingesetzt. Dieser wandelt den Lichtpuls in vier elektrische Pulse um, deren Amplituden den Ort der Lichteinstrahlung wiedergeben. Dabei ist die (relative) Differenz jeweils zweier dieser Signale ein Maß für einen Achsenabschnitt in einem zweidimensionalen Koordinatensystem auf der empfindlichen Fläche des PSD's. Gleichzeitig besitzt ein solcher Detektor die wichtige Eigenschaft, diese Signale in Echtzeit zu generieren. Seine Abmessungen müssen so gewählt werden, daß die Empfangsoptik das gesamte gewünschte Gesichtsfeld auf die empfindliche Fläche abbildet. Letztere ist somit grundsätzlich groß gegen die durch das Bild des Meßobjekts beleuchtete Fläche. Sie ist auch signifikant größer als die Flächen von Detektoren, wie sie für herkömmliche Pulslaufzeitsensoren verwendet werden. Daraus ergibt sich eine relativ große elektrische Kapazität, durch die der Zeitverlauf des Lichtpulses bei der Umwandlung in ein elektrisches Signal verfälscht wird, was aber nicht für dessen zeitliche Verschiebung aufgrund der abstandsabhängigen Lichtlaufzeit über das Meßobjekt gilt. Diese wird getreu wiedergegeben, und man braucht sie nur genau genug bestimmen, um den Abstand des Meßobjekts zu kennen.

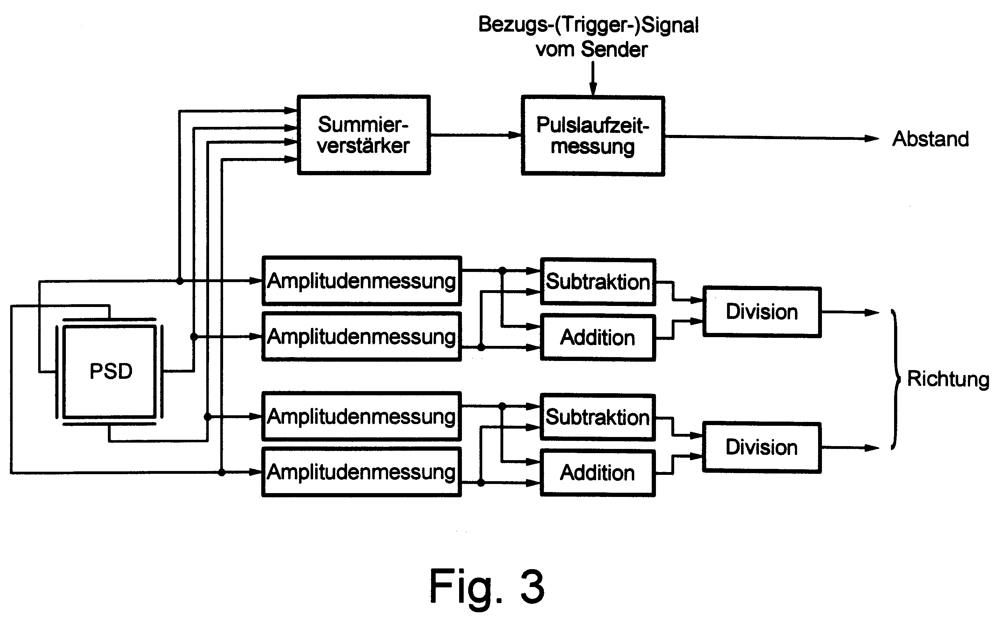

Fig. 3 zeigt ein Blockschaltbild einer geeigneten Signalverarbeitungseinrichtung. Zur Abstandsmessung werden alle Signale des PSD's unter Wahrung des Zeitverlaufs addiert, wodurch sich ein Puls ergibt, dessen Amplitude von der Richtung unabhängig ist. Das ist wünschenswert, damit der Sensor eine gleichmäßige Empfindlichkeit über das Gesichtsfeld aufweist. Die Verzögerung dieses Gesamtsignals gegen den ausgesandten Lichtpuls muß nun bestimmt werden. Dazu ist es erforderlich, daß der Sender bei Aussendung des Pulses ein geeignetes Bezugs- oder Triggersignal generiert, das an dieser Stelle berücksichtigt wird. Die Ausgangsgröße ist genau dann ein Maß für den Abstand des Meßobjekts, wenn sie ein Maß für die reine Lichtlaufzeit vom Sender über das Meßobjekt zum Empfänger ist. Die Vorrichtung zur Pulslaufzeitmessung ist so zu gestalten, daß dies sichergestellt ist, ansonsten kann die Ausgangsgröße so gewählt werden wie es zur Weiterverarbeitung am günstigsten erscheint. Insbesondere kann sie bereits digitalisiert sein.

Im unteren Teil von Fig. 3 ist die Vorgehensweise zur Richtungsbestimmung veranschaulicht: Zunächst ist es günstig, für jedes der vier Signale die Pulsamplitude zu messen, d.h. bereits als ersten Schritt eine Umformung in leichter verarbeitbare Größen vorzunehmen als dies die kurzen, vom PSD gelieferten Pulse sind. Ein vorteilhaftes Verfahren hierzu stellt z.B. die Integration der elektrischen Pulse über der Zeit dar. Da die Signale zueinander proportional sind, sind ihre Integrale ihren Spitzenwerten (Pulsamplituden) proportional, und da nur Verhältnisse signifikant sind, genügt dies zur Weiterverarbeitung vollauf. Die weitere Verarbeitung beinhaltet nur noch Rechenoperationen, darum ist hier eine Digitalisierung besonders empfehlenswert.

Stehen nun Signale zur Verfügung, die den Pulsamplituden proportional sind, kann die Ermittlung der beiden Richtungskoordinaten mit dem hierfür gebräuchlichen Verfahren erfolgen: Die Signale aus gegenüberliegenden Anschlüssen des PSD's werden sowohl addiert als auch subtrahiert; dann werden die Differenzen durch die Summen dividiert. Die beiden Ergebnisse geben eindeutig den Ort, bzw. den Schwerpunkt des Lichteinfalls an.

Da der PSD nur die Ermittlung eines Punktes gestattet, ist eine so ausgestaltete Meßeinrichtung nur zur Bestimmung der Position eines einzelnen Meßobjekts geeignet. Befinden sich deren mehrere im Gesichtsfeld, so wird ein mit der Gesamt-Reflexion der einzelnen Objekte gewichteter Mittelwert gemessen, es sei denn, die Abstände unterscheiden sich so stark, daß die Objekte beim Empfänger zeitlich wohlunterscheidbare Einzelpulse hervorrufen. Darum ist diese Ausgestaltung überall dort vorteilhaft, wo es auf die schnelle Erfassung einzelner Objekte ankommt, denn die Ermittlung der Richtungsinformation aus den vom Detektor gelieferten Signalen ist sehr einfach und kann leicht in Echtzeit erfolgen.

Nachfolgend soll nun auf das Ausführungsbeispiel zur Bestimmung von Richtung und Abstand mit zwei getrennten Empfängern eingegangen werden.

Matrix- oder Zeilen-Anordnungen von Photodetektoren besitzen nicht nur eine Empfindlichkeit für die Position des Lichteinfalls, sondern sogar eine Ortsauflösung, also die Möglichkeit, mehrere Punkte, auf denen gleichzeitig Licht einfällt, voneinander zu unterscheiden.

Da dies durch Aggregation einer Vielzahl einzelner Detektoren erreicht werden muß, kann ein solcher Detektor keine Signale generieren, die den Ort des Lichteinfalls direkt wiedergeben; das muß eine nachgeschaltete Signalverarbeitungseinrichtung durch Identifikation der belichteten Detektorelemente erledigen. Dieser Zusatzaufwand kann aber aufgewogen werden durch die Möglichkeit, die Positionen mehrerer gleichweit entfernter Meßobjekte simultan zu bestimmen oder auch Informationen über die Form eines erfaßten Meßobjekts zu erlangen. Es ist allerdings unvertretbar aufwendig, diesen Identifikationsvorgang in Echtzeit erledigen zu wollen, also während der kurzen Zeit, in der der Lichtpuls registriert wird. Deshalb ist ein Empfänger mit einem solchen Vielfach-Detektor nicht oder nur sehr schlecht für eine Abstandsmessung über die Pulslaufzeit geeignet.

Es steht aber nichts der Einführung eines Zusatzempfängers entgegen, dessen Detektor die fehlende Echtzeitfähigkeit zur Abstandsmessung besitzt. In seiner Bauart unterscheidet er sich nur durch sein größeres Gesichtsfeld, das jenem des Empfängers zur Richtungsbestimmung entsprechen muß, und die dadurch notwendig werdende größere Empfindlichkeit von den Empfängern herkömmlicher Pulslaufzeit-Abstandsensoren.

Als Detektor für den Empfänger zur Richtungsbestimmung eignen sich vor allem Matrix-Anordnungen von CCD's. Die Energie des empfangenen Lichtpulses wird hier zur Bildung von Ladungen benutzt, die nach Abklingen des Pulses in den einzelnen Detektorelementen gespeichert bleiben und der Reihe nach ausgelesen werden können. Deshalb kann einem solchen Detektor keine Information über die Zeit entnommen werden, zu der der Lichtpuls eintraf. Ebenso gibt es Matrixanordnungen aus Photodioden (sogenannte. FPA's - Focal Plane Arrays). Da bei ihnen jedes Detektorelement den Puls in Echtzeit registriert, eignen sie sich für das hier beschriebene Verfahren nur schlecht, dem das Signal tritt in allen belichteten Elementen gleichzeitig für sehr kurze Zeit auf, was ihre Identifikation sehr erschwert.

Man kann so z.B. auf eine handelsübliche CCD-Kamera zurückgreifen, die allerdings zur Aufnahme von Einzelbildern ausgestattet sein muß. Produkte der Konsumelektronik eignen sich hierfür also nicht. Es muß sichergestellt werden, daß der Empfänger nur auf das Licht des vom Sender ausgestrahlten Pulses anspricht. Bei Verwendung von CCD-Anordnungen ist der Detektor unmittelbar vor Aussendung des Lichtpulses zu löschen und unmittelbar nach dem Empfang auszulesen, was eine mit dem Sendepuls synchronisierte Ansteuer-Einrichtung erfordert. Damit in der Zwischenzeit möglichst wenig Umgebungslicht registriert wird, ist der Empfänger mit einem Interferenzfilter zu versehen, das nur die Wellenlänge des verwendeten Lichts durchläßt.

Mit einem solchen Empfänger erhält man eine zweidimensionale Belichtungs-Verteilung, deren Schwerpunkt ein Maß für die Richtung ist in der sich das Meßobjekt befindet. Ermittelt man den Gesamtschwerpunkt über die gesamte Matrix, so entspricht das der Meßgröße, die ein PSD-Detektor liefert. Isoliert man aber vorher u.U. einzelne belichtete Bereiche und berechnet deren Schwerpunkte gesondert, so lassen sich auch mehrere Meßobjekte in gleichem Abstand simultan erfassen.

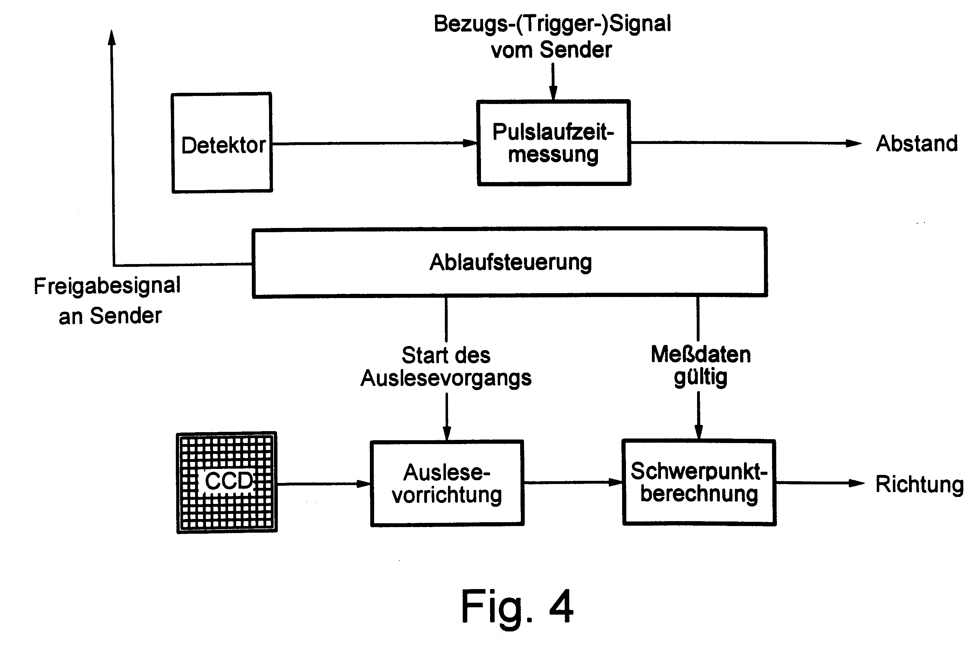

Fig. 4 zeigt beispielhaft als Blockschaltbild eine mögliche Vorgehensweise bei der Signalverarbeitung. Im oberen Teil ist der Empfangsteil eines Pulslaufzeit-Abstandsensor dargestellt, der sich nur in seiner Auslegung für ein großes Gesichtsfeld von herkömmlichen Ausführungen unterscheidet. Der untere Teil des Blockschaltbilds zeigt eine CCD-Matrixanordnung, der eine Auslesevorrichtung nachgeschaltet ist. Dieser wiederum folgt eine Einrichtung zur Auswertung der vom CCD gelieferten Lichtverteilungsdaten, im wesentlichen zur Berechnung eines oder mehrerer Schwerpunkte.

Ganz oberflächlich betrachtet genügt dies schon für eine Positionsbestimmung, für eine zuverlässige Funktion ist aber noch eine Ablaufsteuerung vorzusehen. Sie leitet die Messung ein, indem sie ein Auslesen des CCD's veranlaßt, wodurch dieses gelöscht wird. Damit nun diese voraussichtlich erratischen Daten nicht als unsinnige Richtungsinformation am Ausgang erscheinen, unterbleibt dabei das Signal "Meßdaten gültig" an die Einrichtung zur Schwerpunktberechnung. Ist genug Zeit für das Löschen des CCD's verstrichen (dies kann alternativ auch durch ein Quittungssignal von der Ausleseeinrichtung angezeigt werden), so generiert die Ablaufsteuerung ein Freigabesignal an den Sender, der damit die Erlaubnis zum Senden eines Pulses erhält. Es ist nicht ratsam, dieses Freigabesignal als Bezugssignal für die Pulslautzeitmessung zu benutzen, weil es für den Sender einfacher ist, zum tatsächlichen Sendezeitpunkt ein Signal zu generieren als eine wohldefinierte Sendeverzögerung gegen das Freigabesignal einzuhalten. Deswegen erfolgt die Pulslaufzeitmessung exakt so wie bei der Ausführung mit einem PSD-Empfänger. Wenn der vom Meßobjekt reflektierte Puls empfangen wurde, was z.B. durch Verstreichenlassen einer gewissen Zeit oder auch durch ein Signal von der Einrichtung zur Pulslaufzeitmessung sichergestellt werden kann, wird von der Ablaufsteuerung wieder ein Signal zum Auslesen des CCD's generiert. Diesmal wird jedoch zusätzlich der Einrichtung zur Schwerpunktberechnung signalisiert, daß die Auslesevorrichtung nun gültige Daten liefert. Dies führt zur Berechnung des Schwerpunkts der gemessenen Lichtverteilung und zur Ausgabe der entsprechenden Koordinaten in einer beliebigen, für die weitere Verarbeitung geeigneten Form.

Für die in Fig. 4 schlicht mit "Schwerpunktberechnung" bezeichnete Funktionseinheit, die in der praktischen Ausführung wohl meist als Softwaremodul eines Mikrocomputers realisiert sein wird, sind durchaus noch weitere Auswertungsmöglichkeiten gegeben. Da das Meßobjekt abgebildet wird, ist mit Methoden der Bildverarbeitung eine Erkennung oder Klassifizierung möglich, was aber mit Positionsmessung nur am Rande etwas zu tun hat. Wesentlich interessanter ist hierfür die Möglichkeit, den Schwerpunkt der Belichtungsverteilung in Relation zum Umriß des Meßobjekts zu setzen. Der Punkt auf dem Meßobjekt, der in diesen Schwerpunkt abgebildet wird, besitzt nämlich recht genau den Abstand, der über Pulslaufzeit gemessen wird. Es ist somit möglich, Informationen über den Abstand anderer Punkte zu erlangen. Punkte die heller erscheinen als der Schwerpunkt liegen entweder näher oder die entsprechende Fläche des Meßobjekts ist schwächer geneigt. Da das Meßobjekt auch noch mehrfarbig sein kann, dürfte es zumindest sehr schwierig sein, die Form unbekannter Meßobjekte zu bestimmen. Ist andererseits das Meßobjekt von bekannter Beschaffenheit, d.h. von bekannter Form und Färbung, so kann mit dem angegebenen Verfahren nicht nur seine Position sondern auch seine räumliche Orientierung und darüber hinaus noch seine (evtl. variable) Größe bestimmt werden.

Abschließend ist noch auf den Einsatz linearer Positionsdetektoren einzugehen. PSD's und CCD-Anordnungen sind nicht nur als Flächen-, sondern vor allem auch als lineare Positionsdetektoren verfügbar. Bleibt das Meßobjekt zusammen mit dem Sensor in einer gemeinsamen Ebene, so kann zur Positionsbestimmung ein linearer Detektor eingesetzt werden. Vorteilhaft ist dabei neben der einfacheren Signalverarbeitung auch die wesentlich geringere erforderliche Empfindlichkeit des Sensors, wodurch sich größere Reichweiten erzielen lassen.

Da dieser Spezialfall für viele terrestrische Anwendungen (Robotik, Verkehrstechnik u.a.) in guter Näherung gegeben sein dürfte, muß auf den möglichen Einsatz linearer Positionsdetektoren unbedingt hingewiesen werden.

## Patentansprüche

1. Verfahren zur optischen dreidimensionalen Positionsbestimmung mittels eines Pulslaufzeit-Abstandssensors mit Mehrtor-Signalverarbeitung, **dadurch gekennzeichnet, daß** zur Bestimmung der räumlichen Position von lichtreflektierenden Objekten,
a) ein optischer Sender mindestens einen kurzen Lichtpuls in einen Raumwinkelbereich sendet, der signifikant größer ist als der Raumwinkel, den das Meßobjekt von der Meßeinrichtung aus gesehen einnimmt und dabei diesen Raumwinkelbereich mit jedem Lichtpuls gleichmäßig ausleuchtet,
b) dieser Sendelichtpuls das Gesichtsfeld als Ganzes erfaßt,
c) die Bestimmung des Abstands, in dem sich das Meßobjekt befindet, durch Messung der Zeit zwischen Aussendung des Sendelichtpulses und Eintreffen des vom Meßobjekt in Richtung der Meßeinrichtung zurückreflektierten Lichts auf einem Photoempfänger in der Nähe des Senders erfolgt, dessen Gesichtsfeld bei jedem Sendelichtpuls den gesamten vom Sender beleuchteten Raumwinkelbereich umfaßt,
d) die Bestimmung der Richtung, in der sich das Meßobjekt befindet, durch optische Abbildung des vom gleichen Lichtpuls beleuchteten Meßobjekts auf einen positionsempfindlichen Photodetektor und Bestimmung der Position des Bildes erfolgt, dessen Gesichtsfeld ebenfalls bei jedem Sendelichtpuls den gesamten vom Sender beleuchteten Raumwinkelbereich umfaßt,
e) und bei jedem neuen Sendelichtpuls eine neue dreidimensionale Positionsbestimmung erfolgt.

2. Verfahren nach Anspruch 1, **dadurch gekennzeichnet,** daß Abstand und Position mit Hilfe eines einzigen Empfängers mit einem positionsempfindlichen Detektor (PSD) bestimmt werden.

3. Verfahren nach Anspruch 1, **dadurch gekennzeichnet,** daß Abstand und Richtung mit Hilfe von zwei getrennten Empfängern bestimmt werden, wovon nur der Photodetektor des Empfängers zur Bestimmung der Richtung eine Empfindlichkeit für die Position der Objektabbildung besitzt

4. Verfahren nach einem der Ansprüche 1 bis 3, **dadurch gekennzeichnet,** daß die Bestimmung der Bildposition direkt mit Hilfe eines positionsempfindlichen Detektors (PSD) erfolgt.

5. Verfahren nach einem der Ansprüche, 1 bis 4, **dadurch gekennzeichnet,** daß die Bestimmung der Bildposition indirekt über die Bestimmung der belichteten Elemente einer Detektormatrix erfolgt.

6. Verfahren nach einem der Ansprüche 1 bis 5, **dadurch gekennzeichnet,** daß zusätzlich zu der Richtung in der sich das Meßobjekt befindet, aus der Kombination der belichteten Detektorelemente Informationen über Form und/oder Orientierung des Meßobjekts abgeleitet werden.

7. Verfahren nach einem der Ansprüche 1 bis 6, **dadurch gekennzeichnet,** daß durch Ermittlung des Schwerpunkts der Intensitätsverteilung im Bild eines ausgedehnten Meßobjekts die genaue Lage jenes Punktes bestimmt wird, dessen Abstand sich durch die Pulslaufzeitmessung ergibt.

8. Verfahren nach einem der Ansprüche 1 bis 7, **dadurch gekennzeichnet,** daß bei Meßobjekten bekannter Form die Intensitätsverteilung im Bild des Meßobjekts zur Ermittlung der räumlichen Position von Punkten, deren Abstand sich aus der Pulslaufzeitmessung nicht ergibt, herangezogen wird.

9. Verfahren nach einem der Ansprüche 1 bis 8, **dadurch gekennzeichnet,** daß mehrere Lichtpulse ausgesandt werden und durch Anwendung von Mittelungs- oder Korrelationsverfahren auf die Einzelmeßergebnisse die Meßgenauigkeit gesteigert wird.

10. Verfahren nach einem der Ansprüche 1 bis 9, **dadurch gekennzeichnet,** daß durch Erfassung der Bildposition mit Hilfe eines linearen positionsempfindlichen Photodetektors (eindimensionaler PSD, CCD-Zeile etc.) die Position des Meßobjekts in einer Ebene bestimmt wird.
